# EUROPEAN PATENT APPLICATION

(11) **EP 3 958 577 A2**
(43) Date of publication of application: **23.02.2022**
(21) Application number: 21203848.3
(22) Date of filing: 21.10.2021
(51) Int. Cl.: H04N 21/2343, H04N 21/422, H04N 21/658, H04N 21/231, H04N 21/233, G06F 3/16, H04N 21/654, H04N 21/81, H04N 21/414

(54) **VOICE INTERACTION METHOD, VOICE INTERACTION SYSTEM, SERVER AND STORAGE MEDIUM**

(30) Priority: 22.06.2021 CN 202110690428
(71) Applicant: Guangzhou Xiaopeng Motors Technology Co., Ltd., Guangzhou, Guangdong 510000 (CN)
(72) Inventor: GUO, Huapeng, Guangzhou (CN); LI, Zhihao, Guangzhou (CN)
(74) Representative: Ran, Handong

(57) **Abstract**

A voice interaction method, voice interaction system, server and storage medium are provided. The voice interaction method includes: acquiring and transmitting a voice command to a cloud by a vehicle terminal; and processing, by the cloud, the voice command to obtain response text data, and obtaining a corresponding response audio file based on the response text data, such that the cloud sends the response audio file to the vehicle terminal for playback when receiving an audio request sent from the vehicle terminal. The voice interaction method obtains the corresponding response audio file in advance through the cloud, which saves network costs and improves the playback response speed and user experience.

## Description

### Field of Invention

The invention relates to voice technology field, and in particular, to a voice interaction method, voice interaction system, server and storage medium.

### Background

With the rapid development of voice technology and vehicle intelligence, the use of voice technology in vehicles to serve users in the vehicle has greatly improved the user experience. TTS (Text to Speech), which can realize conversion from text to speech, is an important technology for human-machine interaction in artificial intelligence techniques. TTS is widely used in in-vehicle voice interaction.

However, in existing TTS playback approaches, there is a variety of personalized playback content that requires online synthesis of an audio. Such online synthesis process is slow in response, resulting in a slow response of playback of content, which affects user experience.

### Summary of Invention

A voice interaction method, voice interaction system, server and storage medium are provided according to embodiments of the present invention.

In accordance with the present invention, a voice interaction method includes:
acquiring and transmitting a voice command to a cloud by a vehicle terminal; and
processing, by the cloud, the voice command to obtain response text data, and obtaining a corresponding response audio file based on the response text data, such that the cloud sends the response audio file to the vehicle terminal for playback when receiving an audio request sent from the vehicle terminal.

The cloud comprises a first cloud, and processing by the cloud the voice command to obtain the response text data comprises: processing, by the first cloud, the voice command to obtain the response text data.

The cloud comprises a second cloud, wherein obtaining a corresponding response audio file based on the response text data comprises:
searching, by the second cloud, an audio file stored in a cache of the second cloud based on the response text data; and
determining an audio file found in the cache of the second cloud as the response audio file.

The second cloud comprises a preload module, wherein obtaining a corresponding response audio file based on the response text data comprises:
sending, by the second cloud, a synthesis request to a third party server when no audio file is found in the cache of the second cloud, such that the third party server synthesizes the response audio file based on the synthesis request; and
receiving, by the second cloud, the response audio file sent from the third party server and storing the response audio file into the preload module.

The response audio file comprises multiple audio packets, wherein receiving, by the second cloud, the response audio file sent from the third party server and storing the response audio file into the preload module comprises:
receiving, by the second cloud, the multiple audio packets one by one and storing the audio packets into the preload module, such that the second cloud sends the stored audio packets to the vehicle terminal for playback when the vehicle terminal 100 requests the response audio file.

The voice interaction method comprises:
sending, by the cloud, the response text data to the vehicle terminal;
sending, by the vehicle terminal, the audio request to the cloud when determining that the response audio file needs to be requested from the cloud;
sending, by the cloud, the stored response audio file to the vehicle terminal upon receiving the audio request; and
playing, by the vehicle terminal, the received response audio file.

The response audio file comprises multiple audio packets, wherein sending, by the cloud, the stored response audio file to the vehicle terminal upon receiving the audio request comprises:
sending, by the cloud, the multiple audio packets to the vehicle terminal one by one; and
wherein playing, by the vehicle terminal, the received response audio file comprises:
   receiving, by the vehicle terminal, the audio packets one by one and playing the received audio packets.

In accordance with the present invention, a voice interaction system comprises a vehicle terminal and a cloud,
the vehicle terminal is configured to acquire a voice command and transmit the voice command to the cloud; and
the cloud is configured to: process the voice command to obtain response text data, and obtain a response audio file based on the response text data, such that the cloud sends the response audio file to the vehicle terminal when receiving an audio request sent from the vehicle terminal.

In accordance with the invention, a server includes a first cloud and a second cloud;
the first cloud is configured to receive a voice command transmitted from a vehicle terminal, process the voice command to obtain response text data, and send the response text data to the second cloud; and
the second cloud is configured to obtain a corresponding response audio file based on the response text data, such that the second cloud sends the response audio file to the vehicle terminal for playback when receiving the audio request sent from the vehicle terminal.

The present invention further provides a computer-readable storage medium having stored thereon a computer program that, when executed by a processor, implements any one of the embodiments of the voice interaction method.

In the voice interaction method, voice interaction system, server and computer-readable storage medium, the cloud can obtain the corresponding response audio file in advance based on the response text data. In this way, when an audio request sent by the vehicle terminal is received, the cloud can send the response audio file to the vehicle terminal for playback, thereby saving network costs and improving playback response speed and user experience.

Additional aspects and advantages of the present invention will be set forth in the description below, and will become apparent from the description, or can be understand by practice of the present invention.

### Brief Description of Drawings

The above and/or additional aspects and advantages of the present invention will become apparent and readily understood from the following description of the embodiments in connection with the accompanying drawings, in which:
FIG. 1 is a flow chart of a voice interaction method according to the present invention;
FIG. 2 is a block diagram of a voice interaction system according to the present invention;
FIG. 3 is another block diagram of a voice interaction system according to the present invention;
FIG. 4 is another flow chart of a voice interaction method according to the present invention;
FIG. 5 is yet another flow chart of a voice interaction method according to the present invention;
FIG. 6 is still another flow chart of a voice interaction method according to the present invention;
FIG. 7 is a schematic structural view of a vehicle according to the present invention;
FIG. 8 is a schematic diagram of an application scenario of a voice interaction method according to the present invention.

### Detailed Description

The embodiments of the present invention will be described in detail below, examples of which are illustrated in the accompanying drawings, in which like or similar numerals denote like or similar elements or elements having like or similar functions throughout. The embodiments described below with reference to the drawings are illustrative only and are not to be construed as limiting the present invention.

In the description of the embodiments of the present invention, the terms "first", "second" and the like are used for illustration purposes only, and are not to be construed as indicating or implying relative importance or implying the number of technical features following these terms. Accordingly, a feature following a term like "first" or "second" may comprise one or more of such features either explicitly or implicitly. In the description of the embodiments of the present invention, unless specifically indicated, the term "a plurality of' or "multiple" means two or more.

Terms "cloud" and "server(s)" are used interchangeably at various passages of the specification. "Cloud" means computer facilities on the cloud, which may include physical or virtual servers. "Servers" may include virtual servers on the cloud or dedicated servers at particular physical locations.

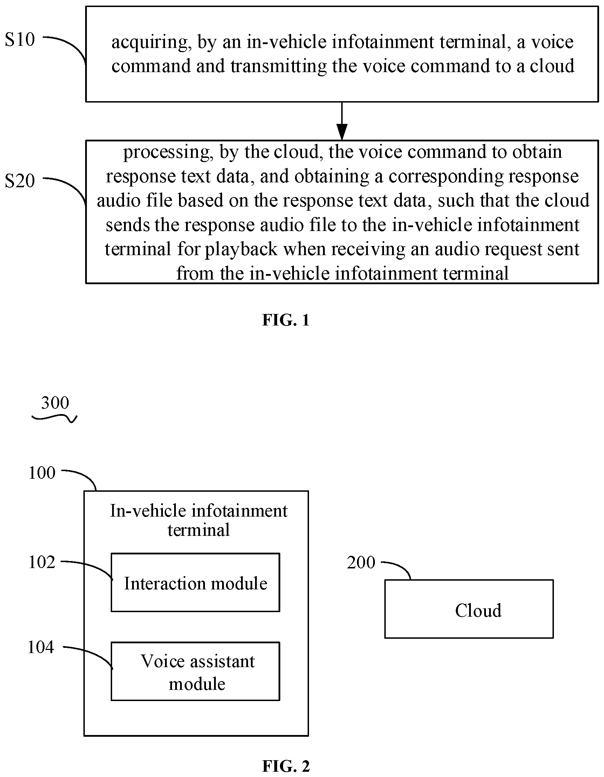

Referring to FIG. 1 and FIG. 2, the present invention provides a voice interaction method, which includes:
step S10, acquiring and transmitting a voice command to a cloud 200 by a vehicle terminal;
step S20, processing, by the cloud 200, the voice command to obtain response text data, and obtaining a corresponding response audio file based on the response text data, such that the cloud 200 sends the response audio file to the vehicle terminal 100 for playback when receiving an audio request sent from the vehicle terminal 100.

In the voice interaction method, the cloud 200 can obtain the corresponding response audio file in advance based on the response text data. In this way, when an audio request sent by the vehicle terminal 100 is received, the cloud 200 can sent the response audio file to the vehicle terminal 100 for playback, thereby saving network costs and improving playback response speed and user experience.

Specifically, in voice interaction approaches in the art, a vehicle terminal typically includes a vehicle operating system having various modules installed thereon or integrated therein, such as an autonomous driving module, a voice assistant module, a display module, a navigation module, etc. The vehicle terminal acquires a voice command and transmits it to the cloud. The cloud obtains response text data based on the voice command and sends the response text data to the vehicle terminal. The vehicle terminal determines to request a response audio file from the cloud based on the response text data. The cloud then obtains the response audio file based on the request from the vehicle terminal. However, in such approaches, when the response audio file is not stored in the cloud (especially in most personalized playback scenarios), the cloud has to synthesize or request a third party service to synthesize the response audio file. This leads to increased network costs on the service chain, slows down the response speed of the vehicle terminal, and reduces user experience.

In the voice interaction method in accordance with the invention, while obtaining the response text data based on the voice command, the cloud 200 can acquire in advance the corresponding response audio file based on the response text data, thereby improving the playback response speed and user experience.

Examples are given below to facilitate understanding. For example, the cloud sends the response text data to the vehicle terminal and the vehicle terminal determines to request a response audio file from the cloud based on the response text data, which processes take 200ms in total. In the event that the response audio file cannot be found in the cloud, the cloud will obtain the response audio file based on the response text data, which process will take 250ms. In the related art, the cloud sends the response text data to the vehicle terminal and the vehicle terminal requests the response audio file from the cloud based on the response text data. After that, the cloud obtains the response audio file based on the response text data. Those processes will take 200ms + 250ms = 450ms.

The invention, during the processes that the cloud 200 sends the response text data to the vehicle terminal 100 and the vehicle terminal 100 determines based on the response text data to request the response audio file from the cloud 200, namely, within 200ms, the cloud 200 also performs the obtainment of the response audio file based on the response text data. Therefore, the obtainment of the response audio file by the following processes will take 250ms: when the response audio file is not found in the cloud 200, the cloud 200 sends the response text data to the vehicle terminal 100; the vehicle terminal 100 determines to request the response audio file from the cloud 200 based on the response text data; and the cloud 200 obtains the response audio file based on the response text data. That is, compared with the prior art, 200ms is saved and the effect of improving the playback response speed is achieved.

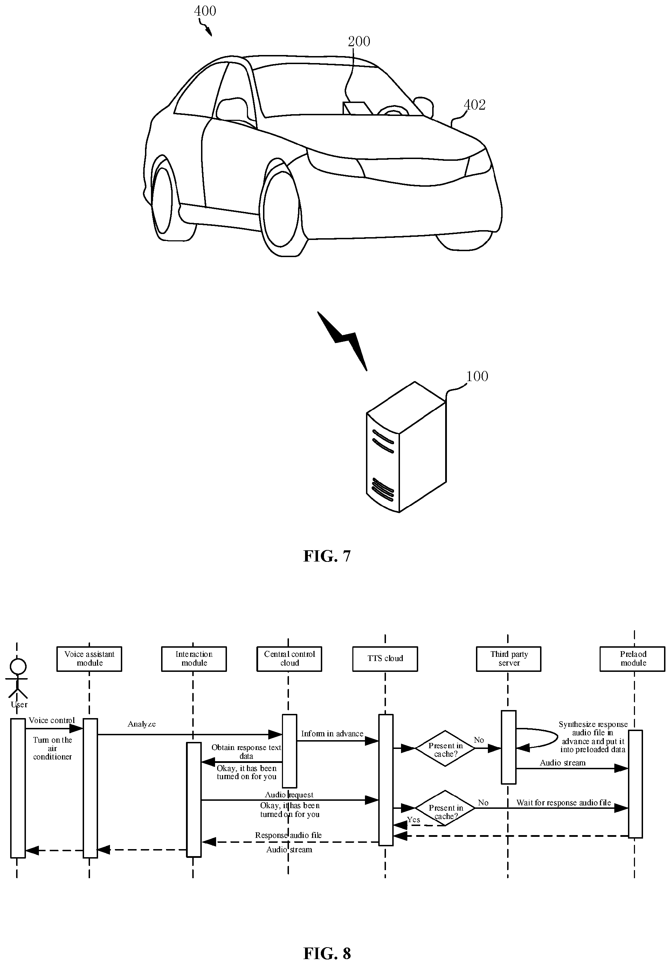

In particular, referring to FIG. 7, the vehicle terminal 100 may be mounted on a vehicle 400. The vehicle terminal 100 may be fixedly mounted on the vehicle 400, or the vehicle terminal 100 may also be removably mounted to the vehicle 400. The way of mounting of the vehicle terminal 100 is not limited herein. The vehicle 400 includes, but not limited to, a fuel vehicle, extended-range electric vehicle, electric vehicle, hybrid vehicle, hydrogen energy vehicle, and the like.

The cloud 200 may be in wired or wireless connection with the vehicle terminal 100 for data and signal transmission. The wireless connection includes, but is not limited to, WIFI, a mobile communication network, etc. The mobile communication network may include mobile communication means, such as 4G, 5G, and 6G.

The vehicle terminal 100 may include an interaction module 102 and a voice assistant module 104, as shown in FIG. 2.

The interaction module 102 may include a display screen configured to display a graphical user interface, such as a control panel interface, a navigation interface, a music interface and the like. The display screen may be a touch display screen. In addition to displaying a graphical user interface associated with the vehicle terminal, the touch display screen provides means for user input. A user inputs a command by touching an associated key on the touch display screen or by inputting an associated gesture. In an embodiment, the display screen may include at least one of a central control display screen, an instrument display screen, and a passenger seat display screen, and an entertainment screen on the back of the driver seat and the passenger seat of the vehicle 400. The user may input a relevant command through a key on the vehicle 400 or through a voice, to have the desired graphical user interface to be displayed. The display screen can also display text content of a response audio file, and the words can be displayed synchronously with the words in the playback of the audio.

The voice assistant module 104 is configured to collect a voice from a user, generate a voice command, and play an audio. For example, the voice assistant module 104 may have a microphone and a speaker. The voice assistant module 104 collects a user's voice through the microphone and generates a voice command, and transmits it to the interaction module to upload to the cloud 200. The cloud 200 performs natural language processing, and in particular natural language understanding, on the voice command to obtain a corresponding operation instruction and response text data. The voice assistant module 104 may play the response audio file using the speaker.

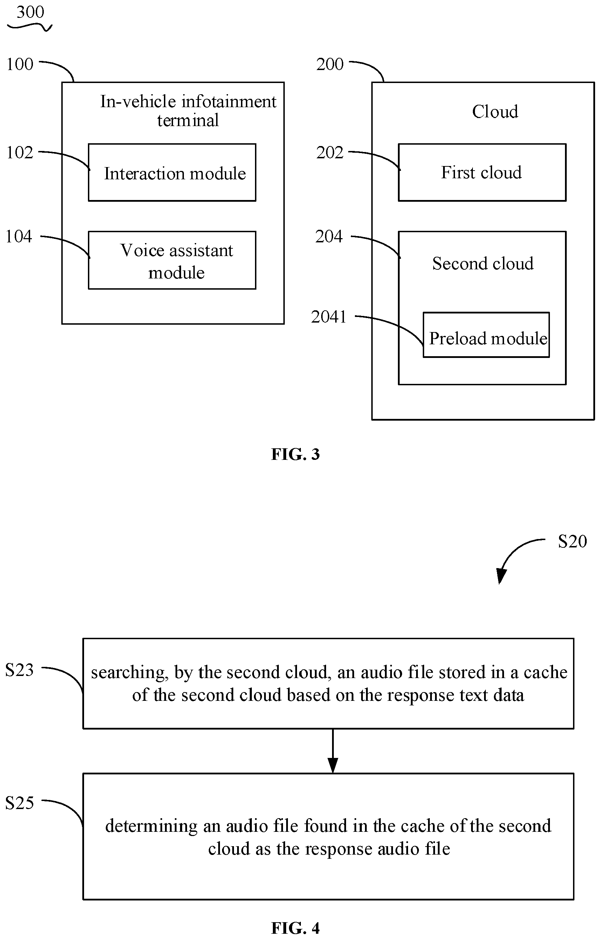

Referring to FIG. 3, the cloud 200 includes a first cloud 202. The step S20 includes:
step S21, processing by the first cloud 202 the voice command to obtain the response text data.

In this way, after obtaining the voice command, the first cloud 202 may perform natural language processing, and in particular natural language understanding, on the voice command to obtain the response text data, so as to provide a basis for obtaining the corresponding response audio file based on the response text data.

In particular, the voice command may be an audio with user command content. The first cloud 202 can perform natural language processing, and in particular natural language understanding, on the voice command, and then provide response text data corresponding to the result of the natural language understanding. For example, in an embodiment of the invention, the voice command is an audio having the user command content of "turn on the air conditioner". The first cloud 202 performs natural language understanding on the voice command and obtains a natural language understanding result of "turn on the air conditioner". The first cloud 200 then provides the response text data of "Okay, it has been turned on for you" corresponding to the natural language understanding result of "turn on the air conditioner". The first cloud 202 may also issue an operation instruction for turning on the air conditioner to the vehicle terminal in response to the voice command, such that the vehicle terminal controls the air conditioner of the vehicle to be turned on.

It should be noted, the response text data may include data of the response text. In particular, in some user-friendly response scenarios, the vehicle terminal 100 may not have a corresponding response audio file stored locally. In this case, the vehicle terminal 100 may send an audio request to the cloud, which then sends the response audio file acquired in advance to the vehicle terminal for playback to achieve interaction.

The first cloud 202 may include a central control cloud. The central control cloud may be a server of a vehicle manufacturer, which includes but not limited to a server for performing natural language understanding.

Referring to FIG. 3 and FIG. 4, the cloud 200 includes a second cloud 204. The step S20 includes:
step S23, searching, by the second cloud 204, an audio file stored in a cache of the second cloud 204 based on the response text data; and
step S25, determining an audio file found in the cache of the second cloud 204 as the response audio file.

In this way, obtaining the response audio file by searching the audio file in the cache of the second cloud 204 can quickly respond to a playback demand, thereby improving user experience. Specifically, the cache of the second cloud may be a data module storing audio files. The second cloud 204 may search for an audio file stored in the cache of the second cloud 204 based on the response text data, and determine the found audio file as the response audio file.

The second cloud 204 may include a TTS (Text To Speech) cloud. The TTS cloud may be a server of a vehicle manufacturer, which includes but not limited to a server for processing response wording and synthesizing response audio files. The second cloud 204 and the first cloud 202 communicate with each other via a wired or wireless connection, such that the second cloud 204 can obtain response text data sent by the first cloud 202. The wireless connection includes, but not limited to, WIFI, a mobile communication network, etc. The mobile communication network may include mobile communication means, such as 4G, 5G, and 6G.

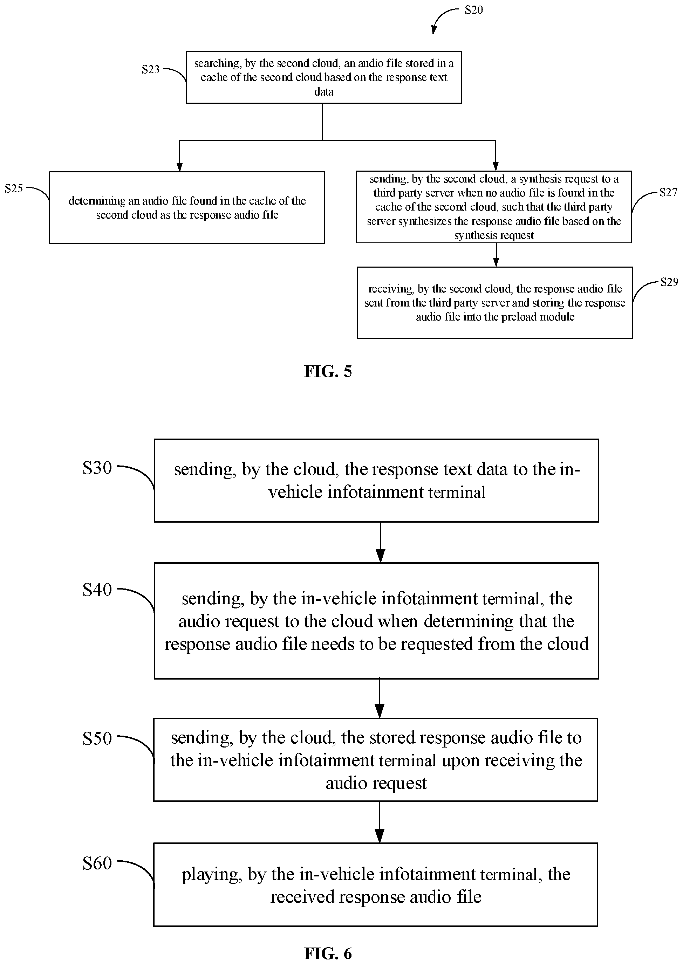

Further, referring to FIG. 3 and FIG. 5, the second cloud 204 includes a preload module 2041. The step S20 includes:
step S27, sending a synthesis request to a third party server when no audio file is found in the cache of the second cloud 204, such that the third party server synthesizes the response audio file based on the synthesis request; and
step S29, receiving, by the second cloud 204, the response audio file sent by the third party server and storing the response audio file into the preload module 2041.

In this way, when the audio file is not found in the second cloud, that is, in the event of cache miss, the second cloud sends a synthesis request to the third party server to store the response audio file into the preload module 2041 in advance. This saves network costs and improves the playback response speed and user experience.

Specifically, when the response audio file corresponding to the response text data is not found in the cache of the second cloud 204, the steps S27 and S29 are performed. The corresponding response audio file sent by the third party server is stored into the preload module 2041, such that when the vehicle terminal 100 sends an audio request, the response audio file can be quickly obtained from the preload module 2041 and sent to the vehicle terminal 100 for playback.

Further, the response audio file includes multiple audio packets, and step S29 includes:
receiving, by the second cloud 204, the multiple audio packets one by one and storing the audio packets into the preload module 2041, such that the second cloud 204 sends the stored audio packets to the vehicle terminal 100 for playback when the vehicle terminal 100 requests the response audio file.

In this way, an audio packet first synthesized by the third party server can be first sent to the second cloud 204 for storage. When the vehicle terminal 100 sends an audio request, the second cloud 204 sends the first stored audio packet to the vehicle terminal 100. While the vehicle terminal 100 is playing the received audio packet, the third party server can continue to synthesize and send the remaining audio packets, and the second cloud 204 can continue to receive and store the audio packets and then send to the vehicle terminal 100. Thus, audio packets can be provided to the vehicle terminal 100 without the response audio file being completely synthesized, further enhancing playback response speed and user experience.

In particular, the transition of audio packets may be regarded as transition of audio data in the form of audio streams. The entire response audio file can be segmented into a plurality of audio packets, and each audio packet is equivalent to one frame of audio data.

In an example, the response audio file is "Okay, it has been turned on for you". The response audio file includes multiple audio packets segmented based on word boundary information. The word boundary information may be determined based on semantic boundaries between words or phrases. For example, words or phrases in sentence "Okay, it has been turned on for you" include "Okay", "it has been", "for you" and "turned on", with boundary information between each other. The audio data of one word or phrase may include one or several audio packets depending on the length of an audio packet. After having been synthesized the audio packet containing "Okay" and while synthesizing the audio packet containing "it has been", the third party server sends the audio packet containing "Okay" to the second cloud 204. Thus, when receiving an audio request from the vehicle terminal 100, the second cloud 204 sends the audio packet containing "Okay" to the vehicle terminal 100 for playback. Similarly, the second cloud 204 receives the audio packets containing "Okay", "it has been", "for you" and "turned on" one by one and stores them into the preload module 2041. When the vehicle terminal 100 sends an audio request, the second cloud 204 sends the stored audio packets to the vehicle terminal 100 for playback.

It should be noted, after the second cloud 204 sends the stored audio packets to the vehicle terminal 100 for playback, in an embodiment, the preload module 2041 can either continue storing the stored audio packets or send the stored audio packets to other caches or storage modules of the second cloud 204 for storage. As such, the next time the response text data corresponding to the response audio file is received, the second cloud can respond quickly. In an embodiment, the preload module 2041 may also delete the corresponding response audio file after sending the response audio file to the vehicle terminal to save storage space. The preload module may include a cache or other storage module.

Referring to FIG. 6, the voice interaction method comprises:
step S30, sending by the cloud 200 the response text data to the vehicle terminal 100;
step S40, sending, by the vehicle terminal 100, an audio request to the cloud 200 when determining that the response audio file needs to be requested from the cloud 200;
step S50, sending, by the cloud 200, the stored response audio file to the vehicle terminal 100 upon receiving the audio request; and
step S60, playing by the vehicle terminal 100 the received response audio file.

In this way, the vehicle terminal 100 may send an audio request to the cloud 200 upon determining that a response audio file needs to be requested from the cloud 200. The cloud 200 can then send the response audio file to the vehicle terminal 100 for playback, which improves the playback response speed and user experience.

Specifically, the vehicle terminal 100 can determine, from the response text data sent from the cloud 200, whether a response audio file needs to be requested from the cloud 200. In an embodiment, the vehicle terminal 100 receives response text data sent by the first cloud 202. For example, the vehicle terminal 100 receives the response text data sent by the first cloud 202 as "Okay, it has been turned on for you". At this time, if the vehicle terminal receives other services that require a voice response (in some embodiments, these services may be defined as interrupting services), the vehicle terminal may intervene in the sequence of the response wording. In such a case, the vehicle terminal may cancel the sending of the audio request of "Okay, it has been turned on for you", or delay the sending of the audio request. If the vehicle terminal 100 does not receive other services requiring voice responses, the vehicle terminal 100 determines that the audio request of "Okay, it has been turned on for you" is to be sent to the second cloud. The second cloud 204 obtains the entire response audio file, or one or more audio packets thereof, and sends the file or packets to the vehicle terminal 100 for playback.

It should be noted, while the first cloud 202 sends the response text data to the vehicle terminal 100 and the vehicle terminal 100 sends the audio request to the second cloud 204, the first cloud 202 may also inform the second cloud 204 in advance to obtain the corresponding response audio file. For example, when the preload module 2041 does not have the response audio file, the second cloud 204 may request the third party server to synthesize the response audio file and store it in the preload module 2041. The second cloud 204 may obtain the response audio file directly from the preload module 2041. This enables the response of the vehicle terminal 100 to be adapted to user personalized requests while guaranteeing the playback response speed.

The response audio file includes multiple audio packets, and step S50 includes:
step S51, sending by the cloud 200 the multiple audio packets to the vehicle terminal 100 one by one.

The step S60 includes:
step S61, receiving by the vehicle terminal 100 the audio packets one by one and playing the received audio packets.

In this way, the vehicle terminal 100 can receive some of the audio packets and play the received audio packets. During the playback of the received audio packets, the vehicle terminal 100 can continue to receive audio packets, thereby further improving the playback response speed and user experience.

Referring to FIG. 8, which illustrates an application scenario of a voice interaction method according to an embodiment of the present invention. The vehicle terminal 100 includes a voice assistant module 104 and an interaction module 102, as shown in FIG. 8. The first cloud 202 may be a central control cloud. The central control cloud may be a server of a vehicle manufacturer, which includes but not limited to a server for performing natural language processing. The second cloud 204 may include a TTS (Text To Speech) cloud. The TTS cloud may be a server of a vehicle manufacturer, which includes but not limited to a server for processing response wording and synthesizing response audio files.

The voice assistant module receives a voice request from a user, such as "turn on the air conditioner", and transmits the voice request to the central control cloud for analysis.

The central control cloud performs natural language understanding to obtain the user's wish. The central control cloud generates response text data, and sends the response text data and an operation instruction to turn on the air conditioner to the interaction module 102. At the same time, the central control cloud sends the generated response text data to the TTS cloud to notify the TTS cloud ahead of time.

The TTS cloud searches the audio files stored in the cache of the TTS cloud based on the response text data, and determines an audio file found in the cache of the TTS cloud cache as the response audio files.

In the event that the TTS cloud does not find the response audio file based on the response text data, the TTS cloud sends a synthesis request to the third party server, so that the third party server synthesizes the response audio file according to the synthesis request. The TTS cloud receives the response audio file sent by the third party server and stores it in the preload module 2041.

The interaction module receives the response text data, such as "Okay, it has been turned on for you", and sends an audio request to the TTS cloud based on the response text data.

The TTS cloud receives the audio request and searches for audio files stored in the cache of the TTS cloud. After finding a corresponding response audio file, the TTS cloud sends the response audio file to the interaction module. The interaction module sends the response audio file to the voice assistant module for playback. The method ends. The playback content of the response audio file is "Okay, it has been turned on for you".

When the TTS cloud does not find the response audio file based on the audio request, the TTS cloud obtains a response audio file stored in the preload module 2041, and sends the response audio file from the preload module 2041 to the interaction module. The interaction module sends the response audio file to the voice assistant module for playback. The method ends. The playback content of the response audio file is "Okay, it has been turned on for you".

Upon completion of the above processes, the method ends. In the embodiment of the invention, the TTS cloud obtains the corresponding response audio file in advance. Upon receipt of an audio request sent from the interaction module, the TTS cloud can send the response audio file to the voice assistant module for playback. This saves network costs and improves the playback response speed and user experience.

Referring to FIG. 2 and FIG. 3, a voice interaction method 300 in accordance with an embodiment of the present invention includes a vehicle terminal 100 and a cloud 200.

The vehicle terminal 100 is configured to acquire a voice command and transmit the voice command to the cloud 200.

The cloud 200 is configured to obtain the voice command, process the voice command to obtain response text data, and obtain and store a corresponding response audio file based on the response text data, such that the cloud 200 sends the response audio file to the vehicle terminal 100 for playback when receiving the audio request sent from the vehicle terminal 100.

In the voice interaction system 300, the cloud 200 can obtain the corresponding response audio file in advance based on the response text data. In this way, when an audio request sent by the vehicle terminal 100 is received, the cloud 200 can sent the response audio file to the vehicle terminal 100 for playback, thereby saving network costs and improving playback response speed and user experience.

In accordance with an embodiment of the invention, the server may include a cloud 200, and the server includes a first cloud 202 and a second cloud 204.

The first cloud 202 is configured to receive a voice command transmitted from the vehicle terminal 100, process the voice command to obtain response text data, and send the response text data to the second cloud 204.

The second cloud 204 is configured to obtain a corresponding response audio file based on the response text data, such that the second cloud 204 sends the response audio file to the vehicle terminal 100 for playback when receiving the audio request sent from the vehicle terminal 100.

In the server described above, the second cloud 204 can obtain the corresponding response audio file in advance based on the response text data. In this way, when an audio request sent by the vehicle terminal 100 is received, the second cloud 204 can send the response audio file to the vehicle terminal 100 for playback, thereby saving network costs and improving playback response speed and user experience.

An embodiment of the present invention provides a computer-readable storage medium having stored thereon a computer program that, when executed by a processor, implements any one of the embodiments of the voice interaction method.

With the storage medium, the corresponding response audio file can be obtained in advance based on the response text data. In this way, when an audio request is received, the response audio file can be sent to the vehicle terminal 100 for playback, thereby saving network costs and improving playback response speed and user experience.

The computer-readable storage medium may be located on the vehicle 400 or may be located on a server of the cloud 200. The vehicle 400 can communicate with the server of the cloud 200 server to obtain a corresponding program. It can be understood that the computer program include computer program codes. The computer program codes may be in the form of source codes, object codes, an executable file or some intermediate form, or the like. The computer-readable storage medium may include any entity or device capable of carrying computer program codes, a recording medium, a U disk, a removable hard disk, a magnetic disk, an optical disk, a computer memory, a Read-Only Memory (ROM), a Random-Access Memory (RAM), a software distribution medium, and the like.

The computer-readable storage medium may be any device that can contain, store, communicate, propagate, or transmit a program for use by an instruction execution system, apparatus, or device or in connection with the instruction execution system, apparatus, or device. More specific examples (a non-exhaustive list) of the computer-readable storage medium may include: an electrical connection (an electronic device) having one or more wires, a portable computer diskette (a magnetic device), a random access memory (RAM), a Read-Only Memory (ROM), an Erasable Programmable Read-Only Memory (EPROM or Flash memory), a fiber optic device, and a portable compact disc read-only memory (CDROM). In addition, the computer-readable storage medium could even be paper or other suitable medium upon which a program is printed, as the program can be electronically obtained, for example, by optical scanning of the paper or other medium, then compiled, interpreted or otherwise processed in a suitable manner if necessary, and then stored in a computer memory.

It will be appreciated that the above description of the embodiments and the benefits of the voice interaction method also applies to the voice interaction system 300, the server, and the computer-readable storage medium of the present invention, which will not be repeated herein to avoid redundancy.

In the description herein, specific features, structures, materials, or characteristics described in connection with terms such as "an embodiment," "some embodiments," "an example," "a specific example," or "some examples," etc. are intended to be comprised in at least one embodiment or example of the present invention. In this specification, references to the above terms are not necessarily intended to refer to the same embodiment or example. Furthermore, the specific features, structures, materials, or characteristics described may be combined in any suitable manner in any one or more embodiments or examples. In addition, a skilled person can appreciate that the various embodiments, examples, and features of the embodiments and examples described herein may be combined with each other, except to the extent that they might be mutually exclusive.

Any process or method operations in the flowcharts or otherwise described herein may be understood as representing modules, segments, or portions of codes which include one or more executable instructions for implementing specific logical functions or steps of the processes. Moreover, it will be appreciated by those skilled in the art that the scope of the preferred embodiments of the present invention includes additional embodiments, in which functions may be performed out of order from that illustrated or discussed herein, but may instead be performed in substantially the same way or in reverse order depending on the functionality involved.

While embodiments of the present invention have been illustrated and described above, it will be appreciated that the embodiments described above are illustrative and are not to be construed as limiting the invention. Variations, modifications, substitutions, and alterations of the embodiments described above may be made by one of ordinary skills in the art without departing from the scope of the present invention.

## Claims

1. A voice interaction method, **characterized by**:
acquiring and transmitting a voice command to a cloud by a vehicle terminal; and
processing, by the cloud, the voice command to obtain response text data, and obtaining a corresponding response audio file based on the response text data, such that the cloud sends the response audio file to the vehicle terminal for playback when receiving an audio request sent from the vehicle terminal.

2. The voice interaction method of claim 1, wherein the cloud comprises a first cloud, and said processing by the cloud the voice command to obtain the response text data comprises:
processing, by the first cloud, the voice command to obtain the response text data.

3. The voice interaction method of claim 1 or 2, wherein the cloud comprises a second cloud, and said obtaining a corresponding response audio file based on the response text data comprises:
searching, by the second cloud, an audio file stored in a cache of the second cloud based on the response text data; and
determining an audio file found in the cache of the second cloud as the response audio file.

4. The voice interaction method of claim 3, wherein the second cloud comprises a preload module, and said obtaining a corresponding response audio file based on the response text data comprises:
sending, by the second cloud, a synthesis request to a third party server when no audio file is found in the cache of the second cloud, such that the third party server synthesizes the response audio file based on the synthesis request; and
receiving, by the second cloud, the response audio file sent from the third party server and storing the response audio file into the preload module.

5. The voice interaction method of claim 4, wherein the response audio file comprises multiple audio packets, and said receiving, by the second cloud, the response audio file sent from the third party server and storing the response audio file into the preload module comprises:
receiving, by the second cloud, the multiple audio packets one by one and storing the audio packets into the preload module, such that the second cloud sends the stored audio packets to the vehicle terminal for playback when the vehicle terminal requests the response audio file.

6. The voice interaction method of claim 5, wherein the multiple audio packets are segmented based on word boundary information.

7. The voice interaction method of claim 1, further comprising:
sending, by the cloud, the response text data to the vehicle terminal;
sending, by the vehicle terminal, the audio request to the cloud when the vehicle terminal determines that the response audio file needs to be requested from the cloud;
sending, by the cloud, the stored response audio file to the vehicle terminal upon receiving the audio request; and
playing, by the vehicle terminal, the received response audio file.

8. The voice interaction method of claim 7, further comprising, after said step of sending, by the cloud, the response text data to the vehicle terminal:
determining whether a service requiring a voice response has been received by the vehicle terminal; and
if so, cancelling or delaying said sending of the audio request to the cloud.

9. The voice interaction method of claim 7, wherein the response audio file comprises multiple audio packets, wherein said sending, by the cloud, the stored response audio file to the vehicle terminal upon receiving the audio request comprises:
sending, by the cloud, the multiple audio packets to the vehicle terminal one by one; and
wherein said playing, by the vehicle terminal, the received response audio file comprises:
receiving, by the vehicle terminal, the audio packets one by one and playing the received audio packets.

10. A voice interaction system, **characterized in that** the voice interaction system comprises a vehicle terminal and a cloud, wherein:
the vehicle terminal is configured to acquire a voice command and transmit the voice command to the cloud; and
the cloud is configured to:
process the voice command to obtain response text data, and
obtain a response audio file based on the response text data, such that the cloud sends the response audio file to the vehicle terminal for playback when receiving an audio request sent from the vehicle terminal.

11. A server, **characterized by** a first cloud and a second cloud, wherein:
the first cloud is configured to receive a voice command transmitted from a vehicle terminal, process the voice command to obtain response text data, and send the response text data to the second cloud; and
the second cloud is configured to obtain a corresponding response audio file based on the response text data, such that the second cloud sends the response audio file to the vehicle terminal for playback when receiving the audio request sent from the vehicle terminal.

12. A computer-readable storage medium having stored thereon a computer program which, when executed by a processor, implements the steps of the voice interaction method of any one of claims 1-9.
